**Europäisches Patentamt**

(19) **European Patent Office**

**Office européen des brevets**

(11) Veröffentlichungsnummer: **0 289 886**
**B1**

(12) # EUROPÄISCHE PATENTSCHRIFT

(45) Veröffentlichungstag der Patentschrift:
04.07.90

(21) Anmeldenummer: 88106522.1

(22) Anmeldetag: 22.04.88

(51) Int. Cl.⁵: **F16C 33/14,** F16C 32/06,
**B22F 3/24**

(54) **Verfahren zur Herstellung von porösen Lagerschalen für gasstatische Lager.**

(30) Priorität: 05.05.87 DE 3714933

(43) Veröffentlichungstag der Anmeldung:
09.11.88 Patentblatt 88/45

(45) Bekanntmachung des Hinweises auf die Patenterteilung:
04.07.90 Patentblatt 90/27

(84) Benannte Vertragsstaaten:
AT BE CH DE ES FR GB IT LI LU NL SE

(56) Entgegenhaltungen:
EP-A- 0 180 154
DE-A- 1 583 731
FR-A- 1 432 412

(73) Patentinhaber: INTERATOM Gesellschaft mit
beschränkter Haftung, Friedrich-Ebert-Strasse,
D-5060 Bergisch-Gladbach 1(DE)

(72) Erfinder: Pütz, Heinrich, Dipl.-Ing., Wellerscheid 2,
D-5203 Much(DE)

(74) Vertreter: Fuchs, Franz-Josef, Dr.-Ing. et al,
Postfach 22 13 17, D-8000 München 22(DE)

## Beschreibung

Die vorliegende Erfindung betrifft ein Verfahren nach dem Oberbegriff des 1. Anspruchs. In der DE-A-32 30 232 hat die Anmelderin eine Lagerschale für ein gasstatisches Lager und ein Verfahren zu ihrer Herstellung vorgeschlagen, bei der eine poröse (z. B. gesinterte) Lagerschale an ihrer Oberfläche durch Rollieren oder ein anderes geeignetes Verfahren verdichtet wird, um eine Drosselwirkung der Lagerfläche zu erreichen. Durch das Rollieren werden zahlreiche Poren an der Oberfläche verschlossen, so daß sie in einem nachfolgenden Arbeitsgang mittels Elektrokorrosion wieder geöffnet werden müssen. Dies sind aufwendige Arbeitsprozesse, zu denen unter Umständen noch eine spanende Bearbeitung hinzukommt, um die Lagerschale auf das gewünschte Nennmaß des Innendurchmessers zu bringen. Gasstatische Lager der beschriebenen Art finden überall dort Verwendung, wo herkömmliche Kugellager z. B. wegen der geforderten hohen Drehzahlen nicht geeignet sind, beispielsweise zur Lagerung von zahntechnischen Bohrern oder von Spindeln in Spinnmaschinen.

Aufgabe der vorliegenden Erfindung ist ein Verfahren, das eine einfachere, schnellere und kostengünstigere Fertigung derartiger Lagerschalen in einem Arbeitsgang ermöglicht.

Die Lösung dieser Aufgabe erfolgt durch die im kennzeichnenden Teil des 1. Anspruchs angegebenen Verfahrensschritte. Durch das an sich bekannte Verfahren des Aufschrumpfens wird erreicht, daß der Rohling an seiner Innenoberfläche und der Dorn an seiner Außenoberfläche einer erheblichen Druckbelastung ausgesetzt werden; ein Abbau dieser Belastung erfolgt durch eine plastische Verformung des Rohlings, da seine Druckfestigkeit gegenüber derjenigen des Dorns bei annähernd gleichen Materialkennwerten durch das Vorhandensein der Poren herabgesetzt ist. Diese werden in ihrer Größe verringert, so daß die gewünschte Verdichtung der Oberfläche an der vorgesehenen Lagerfläche erfolgt. Der Dorn selbst wird bei diesem Vorgang allenfalls um ein geringes Maß im elastischen Bereich verformt. Durch eine gegebenenfalls unter Berücksichtigung dieses Umstandes gewählte Größe des Dornes wird erreicht, daß der wieder von ihm abgezogene Rohling ohne weitere Bearbeitung bereits das für die Lagerschale gewünschte Maß aufweist.

Wie im 2. Anspruch vorgeschlagen, wird der Grad der Verdichtung der Oberfläche und die Dicke der verdichteten Schicht dadurch eingestellt, daß Rohlinge mit einem solchen Untermaß gegenüber dem Dorn verwendet werden, daß die gewünschten Werte durch den Schrumpfungsprozess selbsttätig erreicht werden.

Wird entsprechend dem 3. Anspruch der Grad der Verdichtung so gewählt, daß eine für den Durchtritt des Lagergases ausreichende Anzahl von Poren erhalten bleibt, entfällt eine Nachbearbeitung der Lagerfläche zum erneuten Öffnen der durch den Verdichtungsprozess verschlossenen Poren.

Der im 4. Anspruch für den Dorn vorgeschlagene keramische Werkstoff weist einen geringeren Wärmeausdehnungskoeffizienten auf als das Sintermetall, aus dem der Rohling besteht; letzterer braucht dann nicht so stark erwärmt zu werden, um bei einem gegebenen Untermaß vom Dorn abgezogen zu werden.

Um einen definierten Grad der Verdichtung zu erreichen, darf das Untermaß des Rohlings nur in einer sehr geringen Variationsbreite schwanken. Läßt sich diese Variationsbreite der Abmessungen bei der Herstellung der Rohlinge mittels eines Sinterverfahrens nicht sicherstellen, gestattet die Abwandlung der Erfindung nach dem 5. Anspruch die Herstellung von Lagerschalen mit der gewünschten Genauigkeit und Porosität in Losen, deren jedes nur solche Rohlinge enthält, bei denen die Variationsbreite um das durch den Durchmesser des zugehörigen Dorns gegebene Untermaß innerhalb der zulässigen Grenzen bleibt. Dies führt ggf. zu unterschiedlichen Graden der Verdichtung bei Lagerschalen der verschiedenen Klassen.

Der Ablauf des erfindungsgemäßen Verfahrens wird an einem Beispiel einer Lagerschale in der Zeichnung dargestellt, und zwar zeigen die Figuren Längsaxialschnitte.

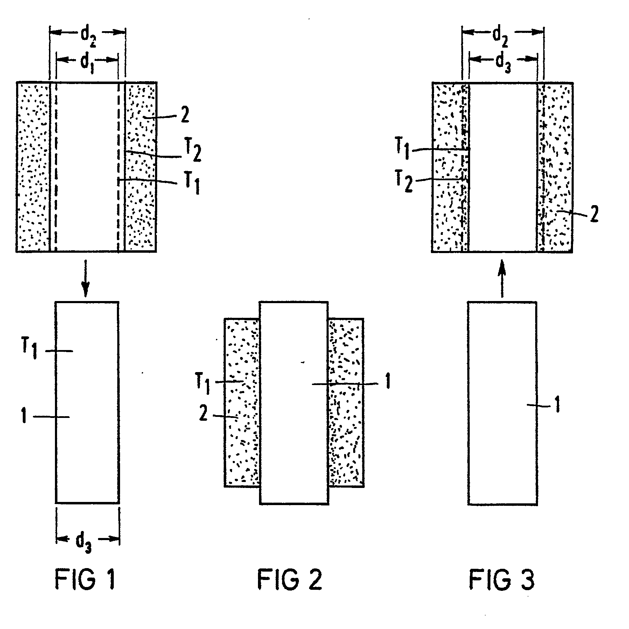

Auf einen hier als unverformbar angenommenen Dorn 1 mit einem Durchmesser $d_3$, der dem gewünschten Innendurchmesser der fertigen Lagerschale entspricht, wird ein Lagerschalenrohling 2 aus Sintermetall aufgezogen, der bei einer ersten Temperatur $T_1$ (üblicherweise die Raumtemperatur) einen Innendurchmesser $d_1$ aufweist, der um ein bestimmtes Maß kleiner ist als der Durchmesser $d_3$. Hierzu ist es erforderlich, daß der Innendurchmesser des Rohlings auf das Maß $d_2$ vergrößert wird, das um ein geringes, für die Handhabung ausreichendes Maß größer ist als der Durchmesser $d_3$. Dies geschieht, indem der Rohling von der Temperatur $T_1$ auf eine zweite Temperatur $T_2$ erhitzt wird, die sich aus den Unterschieden der verschiedenen Durchmesser und den Wärmedehneigenschaften des Sinterwerkstoffes ergibt. Die Durchmesservergrößerung durch die Temperaturerhöhung ist in der Figur 1 dargestellt, wobei auf die Darstellung der selbstverständlich gleichzeitig stattfindenden Vergrößerung des Außendurchmessers des Rohlings der Übersichtlichkeit halber verzichtet wurde. Nach dem Aufschieben des Rohlings 2 auf den Dorn 1 wird ersterer wieder (siehe Figur 2) auf die Temperatur $T_1$ abgekühlt, so daß er schrumpft. Durch das Vorhandensein des Dorns 1 wird eine Rückkehr des Innendurchmessers des Rohlings 2 zum Durchmesser $d_1$ verhindert, vielmehr bleibt dieser bei $d_3$. Durch die dann auftretenden Druckkräfte wird der Rohling 2 an seiner Innenoberfläche plastisch verformt, wobei durch Verringerung des Porenvolumens über einen begrenzten Bereich eine Verdichtung stattfindet (durch die engere Signatur angedeutet). Anschließend wird der Rohling 2 erneut auf die Temperatur $T_2$ erwärmt, worauf er (siehe Figur 3) infolge der Vergrößerung seines Innendurchmessers auf das Maß $d_2$ abgezogen werden kann. Nach einer erneuten Abkühlung auf die Temperatur $T_1$ kehrt der Innendurchmesser etwa (d. h. unter Ausgrenzung der elastischen Teile der Verformung) auf das Maß $d_3$ zurück, und es liegt eine fertige und weitere Bearbeitungsschritte nicht mehr erfordernde Lagerschale 2 vor.

**Patentansprüche**

1. Verfahren zur Herstellung von porösen Lagerschalen für gasstatische Lager mit verdichteter Oberfläche aus gesinterten hohlen Rohlingen, dadurch gekennzeichnet, daß der in seinem Innendurchmesser ($d_1$) gegenüber dem Nenndurchmesser ($d_3$) des Lagers ein Untermaß aufweisende Rohling (2) in erwärmtem ($T_2$) Zustand auf einen Dorn (1) aufgezogen wird, dessen Außendurchmesser ($d_3$) gleich dem Nenndurchmesser des Lagers ist, danach auf die Betriebstemperatur des Lagers ($T_1$) abgekühlt, erneut erwärmt ($T_2$) und schließlich vom Dorn abgezogen wird.

2. Verfahren nach Anspruch 1, dadurch gekennzeichnet, daß das Untermaß des Rohlings (2) in Abhängigkeit vom gewünschten Grad der Verdichtung seiner Innenoberfläche gewählt wird.

3. Verfahren nach Anspruch 2, dadurch gekennzeichnet, daß der Grad der Verdichtung der Innenoberfläche so gewählt wird, daß eine für den Durchtritt des erforderlichen Lagergasstromes ausreichende Anzahl und Größe von Poren erhalten bleibt.

4. Verfahren nach Anspruch 1, dadurch gekennzeichnet, daß ein Dorn (1) aus einem keramischen Werkstoff verwendet wird.

5. Verfahren nach Anspruch 1 für die Verarbeitung von in ihrem Innendurchmesser ($d_1$) in größerem Ausmaß streuenden Rohlingen (2), dadurch gekennzeichnet, daß die Rohlinge in Klassen mit jeweils untereinander nur um ein geringes Maß abweichenden Innendurchmessern eingeteilt werden und jede Klasse auf einen maßlich hierauf angepaßten Dorn (1) aufgezogen wird.

**Claims**

1. A method for producing porous bearing shells with a compacted surface for gas-static bearings, from sintered hollow blanks, characterised in that the blank (2) with an inside diameter ($d_1$) that is smaller that the rated diameter ($d_3$) of the bearing is slipped in a heated ($T_2$) state on to a mandrel (1) whose outer diameter ($d_3$) is equal to the rated diameter of the bearing, is subsequently cooled to the operating temperature of the bearing ($T_1$), reheated ($T_2$) again and finally pulled off the mandrel.

2. A method according to claim 1, characterised in that the undersize of the blank (2) is chosen depending on the desired degree of compaction of its inner surface.

3. A method according to claim 2, characterised in that the degree of compaction of the inner surface is chosen so that a number and size of pores sufficient for the passage of required bearing gas flow is maintained.

4. A method according to claim 1, characterised in that a mandrel (1) of ceramic material is used.

5. A method according to claim 1 for processing blanks (2) whose inner diameters ($d_1$) vary widely, characterised in that the blanks are sorted into classes in which the inner diameters only deviate from one another by a minimal amount and each class is slipped on to a mandrel (1) dimensionally adapted thereto.

**Revendications**

1. Procédé pour fabriquer des coussinets poreux pour des paliers statiques à gaz comportant une surface densifiée formée à partir d'ébauches creuses frittées, caractérisé par le fait qu'on emmanche l'ébauche (2), dont le diamètre intérieur ($d_1$) est inférieur au diamètre nominal ($d_3$) du palier, à l'état chaud ($T_2$) sur un mandrin (1), dont le diamètre extérieur ($d_3$) est égal au diamètre nominal du palier, puis on la refroidit à la température ($T_1$) de fonctionnement du palier et on la chauffe à nouveau ($T_2$) et on la retire finalement du mandrin.

2. Procédé suivant la revendication 1, caractérisé par le fait qu'on choisit l'écart en moins du diamètre de l'ébauche (2) en fonction du degré désiré de densification de sa surface intérieure.

3. Procédé suivant la revendication 2, caractérisé par le fait qu'on choisit le degré de densification de la surface intérieure de manière à conserver un nombre et une taille de pores, suffisants pour le passage du courant nécessaire de gaz du palier.

4. Procédé suivant la revendication 1, caractérisé par le fait qu'on utilise un mandrin (1) réalisé en un matériau céramique.

5. Procédé suivant la revendication 1 pour le traitement d'ébauches (2), dont les diamètres intérieurs ($d_1$) présentent une dispersion assez importante, caractérisé par le fait qu'on range les ébauches selon des classes, dans lesquelles leurs diamètres intérieurs s'écartent respectivement les uns des autres uniquement d'une faible valeur et qu'on emmanche les ébauches de chaque classe sur un mandrin (1) dont les cotes sont adaptées à cette classe.

$d_2$

$d_1$

2

$T_2$

$T_1$

$T_1$

1

$d_3$

**FIG 1**

$T_1$

2

1

**FIG 2**

$d_2$

$d_3$

$T_1$

$T_2$

2

1

**FIG 3**